(19) Europäisches Patentamt
European Patent Office
Office européen des brevets

(11) **EP 3 012 830 B1**

(12) **EUROPEAN PATENT SPECIFICATION**

(45) Date of publication and mention
of the grant of the patent:
**08.07.2020  Bulletin 2020/28**

(51) Int Cl.:
***G09G 5/391*** *(2006.01)*      ***G09G 5/02*** *(2006.01)*

(21) Application number: **15191221.9**

(22) Date of filing: **23.10.2015**

(54) **IMAGE UP-SCALE UNIT AND METHOD**

BILDVERGRÖSSERUNGSEINHEIT UND -VERFAHREN

UNITÉ ET PROCÉDÉ DE CONVERSION ASCENDANTE D'IMAGES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.10.2014  KR 20140144504**

(43) Date of publication of application:
**27.04.2016  Bulletin 2016/17**

(73) Proprietor: **LG Display Co., Ltd.
Seoul 07336 (KR)**

(72) Inventor: **PARK, Yong Min
Gyeonggi-do (KR)**

(74) Representative: **Morrall, Jonathan Ian McLachlan
Kilburn & Strode LLP
Lacon London
84 Theobalds Road
London WC1X 8NL (GB)**

(56) References cited:
**US-A1- 2007 279 372      US-A1- 2008 079 755
US-A1- 2010 259 556      US-A1- 2011 037 784**

**Description**

**BACKGROUND**

**Field of the Disclosure**

The present application relates to image up-scale unit and method.

**Description of the Related Art**

Display devices can display various types of image data which are captured by a still photo or digital video camera, obtained from a still photo archive, generated through software application, or received through one of broadcast or streaming medium. The display devices can be integrated with a variety of electrical appliances. For example, the display devices can be integrated with desktop computers, laptop computers, computer workstations, personal digital assistants, mobile device such as mobile phones, wireless communication devices, multimedia devices, exclusive viewing stations such as cameras and television receivers. Also, the display devices can be combined with the other electrical appliances. In other words, the display devices can be applied to a variety of electrical appliances. Such display devices can include liquid crystal display (LCD) devices, cathode ray tube (CRT) display devices, plasma display devices, projection display devices, organic light emitting diode display devices and so on.

In general, the display device has native maximum resolution. The number of pixels of an image being displayed on the display device can be limited to the native maximum resolution. Meanwhile, the display device can receive an image with the native maximum definition or less. As such, image data or information having a small number of pixel data signals than the total number of pixels of the display can be provided. In this case, the display device can up-scale the low resolution image data into high resolution image data. To this end, the display device can generate additional pixels by performing interpolation for the low resolution image data.

Such an image up-scale must become more important as the display device becomes larger. Also, related art interpolation methods such as bi-linear interpolation, bi-cubic interpolation, cubic spline interpolation, Lanczos interpolation, edge-directed interpolation (EDI) are being applied to the image up-scale. The related art interpolation methods generate the additional pixel data signals using adjacent pixel data signals to one another. Due to this, the related art interpolation methods must require a large number of line memories . Actually, each of the bi-cubic interpolation and the Lanczos interpolation are performed on 16 pixel data signals adjacent to one another in order to an additional pixel data signal. In this case, each of the bi-cubic interpolation and the Lanczos interpolation must be repeatedly performed a total of five times. As such, at least 4 line memories must be used for each of the bi-cubic interpolation and the Lanczos interpolation. Moreover, a sync function must be used to determine weight values of the adj acent pixels. Such a sync function is defined by third degree polynomials. Due to this, the computational quantity for the sync function must largely increase.

US2010/0259556A1 describes a display signal conversion apparatus that converts a first signal having a first color type and color arrangement into a second signal having a second color type and color arrangement.

US2011/0037784A1 describes a liquid crystal driving circuit that controls operations of display areas in a liquid crystal display panel based on plural pieces of divided image data which are prepared by dividing image data for a single screen in accordance with the display areas in the liquid crystal display panel.

US2008/0079755A1 describes a display panel in which a pixel composed of sub-pixels of red, green, blue and at least one other color has two sub-pixels at least in a vertical scanning direction, and color filters are provided respectively corresponding to the sub-pixels.

US2007/0279372A1 describes embodiments that comprise a plurality of modules and means to provide effect dynamic gamut mapping and backlight control.

**BRIEF SUMMARY**

Accordingly, embodiments of the present application are directed to image scale unit and method that substantially obviate one or more of problems due to the limitations and disadvantages of the related art.

The embodiments relate to provide image up-scale unit and method which are adapted to reduce a computational quantity and the size of a logic circuit for up-scaling an input image.

Also, the embodiments relate to provide image up-scale unit and method which are adapted to reduce a computation quantity for an image up-scale by dividing RGBW data signals into a color difference component and a brightness component and differently interpolating the color difference component and the brightness component.

Additional features and advantages of the embodiments will be set forth in the description which follows, and in part will be apparent from the description, or may be learned by practice of the embodiments. The advantages of the embodiments will be realized and attained by the structure particularly pointed out in the written description and claims hereof as well as the appended drawings.

The present invention includes a unit for up-scaling an RGBW input image, as defined by the features of claim 1. The present invention also defines an image up-scale method according to claim 7. Preferred embodiments of the invention are defined in the dependent claims.

Other systems, methods, features and advantages will be, or will become, apparent to one with skill in the art upon examination of the following figures and detailed description. It is intended that all such additional systems, methods, features and advantages be included within this description, be within the scope of the present disclosure, and be protected by the following claims. Nothing in this section should be taken as a limitation on those claims. Further aspects and advantages are discussed below in conjunction with the embodiments. It is to be understood that both the foregoing general description and the following detailed description of the present disclosure are exemplary and explanatory and are intended to provide further explanation of the disclosure as claimed.

## BRIEF DESCRIPTION OF THE DRAWINGS

The accompanying drawings, which are included to provide a further understanding of the embodiments and are incorporated herein and constitute a part of this application, illustrate embodiment(s) of the present disclosure and together with the description serve to explain the disclosure. In the drawings:

Fig. 1 is a block diagram showing a graphic apparatus which includes an image scale unit according to an embodiment of the present disclosure;
Fig. 2 is a detailed block diagram showing the image scale unit according to an embodiment of the present disclosure;
Fig. 3 is a schematic diagram illustrating an operation principle of the image up-scale unit;
Fig. 4 is a schematic diagram illustrating an example of an operation procedure of the image scale unit according to an embodiment of the present disclosure;
Fig. 5 is a block diagram showing a display device according to an embodiment of the present disclosure;
Fig. 6 is a planar view showing arrangement of sub-pixels on the display panel in Fig. 5; and
Fig. 7 is a data sheet quantitatively comparative-evaluating performances of image up-scale units according embodiments of the present disclosure and the related art.

## DETAILED DESCRIPTION OF THE EMBODIMENTS

Reference will now be made in detail to an OLED display device in accordance with the embodiments of the present disclosure, examples of which are illustrated in the accompanying drawings. These embodiments introduced hereinafter are provided as examples to the ordinary skilled person in the art. Therefore, these embodiments might be embodied in a different shape, so are not limited to these embodiments described here. In the drawings, the size, thickness and so on of a device can be exaggerated for convenience of explanation. Wherever possible, the same reference numbers will be used throughout this disclosure including the drawings to refer to the same or like parts.

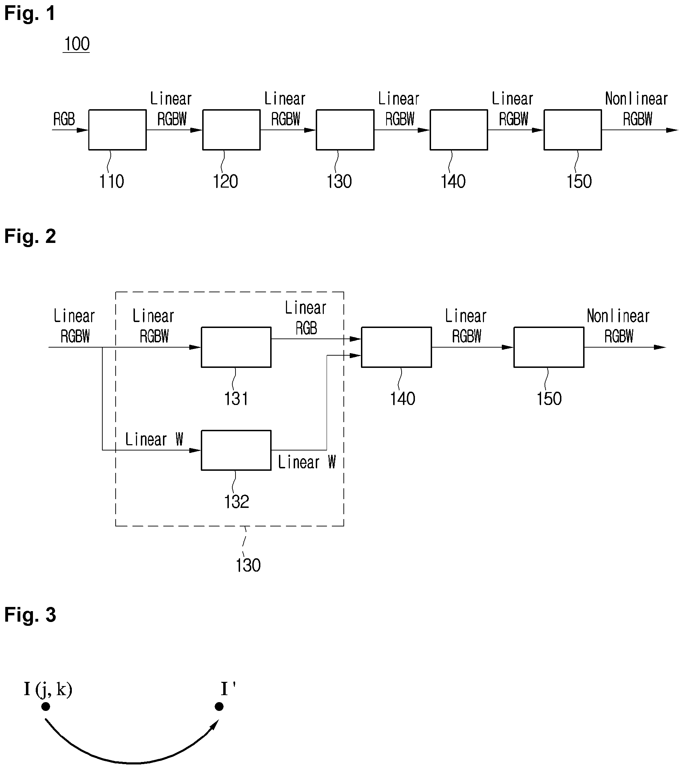

Fig. 1 is a block diagram showing a graphic apparatus which includes an image up-scale unit according to an embodiment of the present disclosure.

The graphic apparatus 100 shown in Fig. 1 can be manufactured in an independent body or built into a more large system. For example, the graphic apparatus 100 can be included into a wireless communication device (such as a mobile wireless mobile), a digital camera, a video camera, a digital multimedia player, a personal digital assistant (PDA), a video game console, a different type video device or an exclusive viewing station (such as a television receiver) . As another example, the graphic apparatus 100 can be included into a personal computer (such as 'a ultra-mobile personal computer) or a laptop device. As still another example, the graphic apparatus 100 can be included into at least one integrated circuit and chip which can be applied to a part or all of the above-mentioned devices.

Also, the graphic apparatus 100 can perform a variety of applications such as graphic applications, video applications, audio applications and different type multimedia applications. For example, the graphic apparatus 100 can be used to perform graphic applications, video game applications, video playback applications, digital camera applications, instant messaging applications, video teleconferencing applications, mobile applications or video streaming applications.

Moreover, the graphic apparatus 100 can process a variety of data types and formats. For example, the graphic apparatus 100 can process image data being input to a display device which will be described in detail.

Referring to Fig. 1, the graphic apparatus 100 can include a de-gamma portion 110, a RGB-RGBW transform portion 120, an up-scale unit 130, a frame buffer 140 and a gamma portion.

The de-gamma portion 110 can input RGB data signals of image data and perform a de-gamma treatment for the input RGB data signals in a frame unit. Also, the de-gamma portion 110 can performs a bit-stretch treatment for the de-gamma-treated RGB data signals. More specifically, the de-gamma portion 110 compensates for an inverse gamma, which is included in the input RGB data signals, through the de-gamma treatment. As such, the (de-gamma)-treated RGB signals can have a linear property. Also, the de-gamma portion 110 can increase the de-gamma-treated RGB data signals in the number of bits through the bit stretch treatment. In accordance therewith, the generation of bit overflow phenomena at data operations, which are performed for converting the RGB data signals into the RGBW data signals, can be prevented. Such a de-gamma portion 110 can simultaneously perform the de-gamma treatment and the bit stretch treatment using a de-gamma LUT (look-up-table).

The RGB-RGBW transformation portion 120 can convert the RGB data signals, which are applied from the de-gamma portion 110, into RGBW data signals. The RGBW data signals obtained by the RGB-RGBW transformation portion 120 are used to drive a display panel including RGBW sub-pixels. In order to optimize power consumption without changing color coordinates, the RGB-RGBW transformation portion 120 can add a W data signal using RGB data components, which are based on measured or estimated values having the same brightness and color coordinate as a W data component, and perform subtractions of the RGB data components from the (de-gamma)-treated RGB data signals. For example, the RGB-RGBW transformation portion 120 can generate the W data signal by extracting one of a common gray scale value, which is represented by equation 1, and a minimum gray scale value, which is represented by equation 2, from the (de-gamma)-treated RGB data signal. Also, the RGB-RGBW transformation portion 120 can generate secondary RGB data signals by subtracting the W data signal from each of the (de-gamma)-treated RGB data signals.

【Equation 1】

$$W = Com(R, G, B)$$

【Equation 2】

$$W = Min(R, G, B)$$

In another different manner, the RGB-RGBW transformation portion 120 can convert R, G and B data signals into four color data signal, which include R, G, B and W data signals, using data conversion methods which are based on properties of each sub-pixel such as a brightness property of the sub-pixel and a driving property of the sub-pixel. In this case, the RGB-RGBW transformation portion 120 can convert the RGB data signals into the RGBW data signals using data conversion methods which are disclosed in Korean patent publication nos. 10-2013-0060476 and 10-2013-0030598.

The up-scale unit 130 can generate color components of an additional pixel on the basis of color components of an arbitrary pixel on the input image and derive a brightness component of the additional pixel using the brightness component of the arbitrary pixel on the input image. In accordance therewith, the up-scale unit 130 can generate an up-scaled image data. Also, when the image data is up-scaled, the up-scale unit 130 can perform interpolation for the RGBW data signals. Such an up-scale unit 130 will be described in detail later.

The gamma portion 150 receives the up-scaled RGBW data signals RGBW from the up-scale portion 130 through the frame buffer 140. Also, the gamma portion 150 can perform a gamma treatment for the input RGBW data signals RGBW in a frame unit. As such, the gamma-treated RGBW data signals can each have a non-linear property.

Fig. 2 is a detailed block diagram showing the up-scale unit in Fig. 1. Fig. 3 is a schematic diagram illustrating an operation principle of the up-scale unit 130 in Fig. 2.

In this disclosure, 'j,k' will be referred to as a coordinate value. The 'j' is an arbitrary ordinate value and the 'k' is an arbitrary abscissa value. A (j,k)th pixel is positioned at a coordinate value of (j,k) on an input image formalized into a two-dimensional space. A (j+1,k)th pixel is positioned adjacently to the (j,k)th pixel in a horizontal direction, a (j,k+1)th pixel is positioned adjacently to the (j,k) th pixel in a vertical direction, and a (j+1,k+1)th pixel is positioned adjacently to the (j,k) th pixel in a diagonal direction. The (j,k)th, (j+1,k)th, (j,k+1)th and (j+1,k+1)th pixels adjacent to one another are arranged in a rectangular shape on the input image.

An up-scaled image includes pixels of an input image (or an original image) and additional pixels which are added by the up-scale unit 130. The additional pixels included in the up-scaled image can be arranged in such a manner as to separate the pixels of the input image from one another or divide the pixels of the input image into a plurality of pixel groups. The pixel group can include 2*2 pixels, 3*3 pixels, 4*4 pixels or others.

As such, at least one (or a part) of the additional pixels can be each positioned between two pixels of the input image which are adjacent to each other in a horizontal direction. At least one other additional pixel (or another part) of the additional pixels can be each positioned between two pixels of the input image which are adjacent to each other in a vertical direction. At least one still other additional pixel (or the other part) of the additional pixels can be each positioned between four pixels of the input image which are adjacent to one another in horizontal and vertical directions.

Referring to Fig. 2, the up-scale unit 130 according to an embodiment of the present disclosure can selectively perform different interpolations for the RGBW data signals RGBW on the basis of two characteristics. One of the two characteristics corresponds to a human color perception characteristic that human eyes are sensitive less to a color different component but more to a brightness component. The other one is that the W data signal among the RGBW data signal reflects the brightness component and the RGB data signals reflect the color different component. In other words, the up-scale unit 130 can perform the different interpolations for the RGBW data signals in consideration of the human color perception characteristic. Such an up-scale unit 130 can include a RGB interpolator 131 and a W interpolator 132.

The RGB interpolator 131 can generate R, G and B data signals of each additional pixel based on the R, G and B data signals of the most antecedent one among the pixels of the input image which will be adjacent to the respective additional pixel. The W interpolator 132 can generate a W data signal of each additional pixel on the basis of the W data signals of at least two pixels of the input image which will be adjacent to the respective additional pixel. For example, it can be assumed that an additional pixel positioned between (j,k)th and (j+1,k)th pixels on the input image is generated. In this case, the RGB interpolator 131 can derive the R, G and B data signals of an additional pixel from the R, G and B data signals of the (j,k)th pixel on the input image which will be adjacent to the additional pixel. The W interpolator 132 can also generate the W data signal of the additional pixel using the W data signals of the (j,k)th pixel and the (j+1,k)th pixel on the input image which will be adjacent to the additional pixel. The R, G and B data signals of the additional pixel can be the same as these of the (j,k)th pixel on the input image which will be adjacent to the additional pixel. The W data signal of the additional pixel can be obtained by averaging the W data signals of the (j,k)th pixel and at least one adjacent pixel thereto on the input image which will be adjacent to the additional pixel. In this manner, the R, G and B data signals for each of the additional pixels can be obtained by referring to the R, G and B data signals of one pixel of the input image which will be adjacent to the respective additional pixel. The W data signal for each of the additional pixels can be defined as an average value between at least two pixels on the input image which will be adjacent to the respective additional pixel. As such, inaccurateness due to the interpolation can be largely lowered.

The RGB and W interpolators 131 and 132 included in the up-scale unit 130 will now be described in detail with reference to Figs. 2 and 3.

The RGB interpolator 131 can derive the R, G and B data signals of each additional pixel from those of the most antecedent one among the pixels of the input image, which will be adjacent to the respective additional pixel. Actually, the additional pixel is positioned (or inserted) either between two pixels on the input image, which are adjacent to each other in a horizontal direction or a vertical direction, or between four pixels on the input image which are adjacent to one another in horizontal and vertical directions. For example, the additional pixel can be positioned (or inserted) between (j,k)th and (j+1,k)th pixels on the input image, between (j,k)th and (j,k+1)th pixels on the input image, or between (j,k)th, (j+1,k)th, (j,k+1)th and (j+1,k+1)th pixels on the input image. In this case, the RGB interpolator 131 can derive the R, G and B data signals $I'_{red}$, $I'_{green}$ and $I'_{blue}$ of an additional pixel I' from those $I_{(j,k),red}$, $I_{(j,k).green}$ and $I_{(j,k),blue}$ of the (j,k)th pixel $I_{(j,k)}$ on the input image, as represented by the equation 3.

$$【\text{Equation 3}】$$

$$I'_{red} = I_{(j,k),red}$$

$$I'_{green} = I_{(j,k),green}$$

$$I'_{blue} = I_{(j,k),blue}$$

As represented by the equation 3, the R, G and B data signals for each of the additional pixels can be referred to the same values as those of an arbitrary pixel of the input image which will be adjacent to the respective additional pixel. This results from the fact that the R, G and B data signals correspond to a color difference component which has low sensitivity in the human color perception. For example, the R, G and B data signals $I'_{red}$, $I'_{green}$ and $I'_{blue}$ of an additional pixel I' can be obtained by originally referring to values of those $I_{(j,k),red}$, $I_{(j,k),green}$ and $I_{(j,k),blue}$ of a (j,k)th pixel $I_{(j,k)}$ on the input image which will be adjacent to the respective additional pixel.

The W interpolator 132 can derive a W data signal of each additional pixel from the W data signals of at least two pixels on the input image, which will be adjacent to the respective additional pixel. For example, the additional pixel can be positioned (or inserted) between (j,k)th and (j+1,k)th pixels on the input image, between (j,k)th and (j,k+1)th pixels on the input image, or between (j,k)th, (j+1,k)th, (j,k+1)th and (j+1,k+1)th pixels on the input image. In this case, the RGB interpolator 131 can derive the W data signals I'white of an additional pixel from at least two among the W data signals I$_{(j,k),white}$, I$_{(j+1,k).white}$, I$_{(j,k+1),white}$ and I$_{(j+1,k+1),white}$ of the (j,k)th, (j+1,k)th, (j,k+1)th and (j+1,k+1)th pixels on the input image, as represented by the equation 4.

【Equation 4】

$$I'_{white} = \frac{I_{(j,k),white} + I_{(j,k+1),white}}{2},$$

$$I'_{white} = \frac{I_{(j+1,k),white} + I_{(j,k),white}}{2}, or$$

$$I'_{white} = \frac{I_{(j,k),white} + I_{(j+1,k),white} + I_{(j,k+1),white} + I_{(j+1,k+1),white}}{4}$$

As represented by the equation 4, a W data signal of an additional pixel can be defined as an average value between the W data signals of two pixels on the input image which will be adjacent to the additional pixel in an interpolated image. The W data signal corresponds to the brightness component having high sensitivity in the human color perception. As such, the W data signal of the additional pixel can be obtained from the W data signals of at least two pixels on the input image, which will be adjacent to the additional pixel in the interpolated image, by performing a linear interpolation process. In this way, the W data signal of the additional pixel is obtained using an average value interpolation method, which corresponds to the simplest interpolation method, as an example. However, this present disclosure is not limited to this. In other words, a variety of interpolation methods can be selectively used to generate the W data signal of the additional pixel in consideration of the complexity tolerance of a system due to computational complexity.

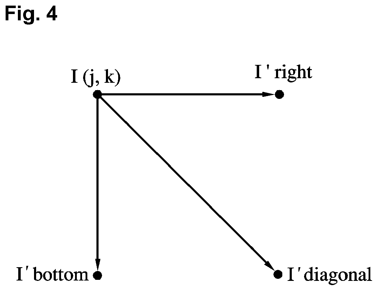

Fig. 4 is a schematic diagram illustrating an example of an operation procedure of the image scale unit according to an embodiment of the present disclosure.

Referring to Fig. 4, it is provided a part of an up-scaled image which can be displayed on a display panel with high definition of 3840*2160. The up-scaled image can be derived from an input image opposite to another display panel with low definition of 1920*1080, 2560*1440, 2880*1620, 3072*1728, or others. The up-scaled image includes a plurality of additional pixels with the exception of all the pixels on the input image.

The additional pixels can be arranged in such a manner as to separate the pixels on the input image from one another or divide the pixels on the input image into a plurality of pixel groups. Also, the additional pixels can be distinguished into additional right pixels I'$_{right}$, additional bottom pixels I'$_{bottom}$ and additional diagonal pixels I'$_{diagonal}$ according to their positions.

The additional right pixel I'$_{right}$ can correspond to an additional pixel positioned at the right side of the most antecedent one among the pixels of the input image which are adjacent to the additional pixel. The additional bottom pixel I'$_{bottom}$ can be an additional pixel positioned at the bottom side of the most antecedent one among the pixels of the input image which are adjacent to the additional pixel. The additional diagonal pixel I'$_{diagonal}$ can become an additional pixel positioned at the right-bottom side of the most antecedent one among the pixels of the input image which are adjacent to the additional pixel.

For the convenience of explanation, it is assumed that a (j,k)th pixel I$_{(j,k)}$ on the input image corresponds to the most antecedent one among the pixels of the input image which are adjacent to the additional right, bottom and diagonal pixels I'$_{right}$, I'$_{bottom}$ and I'diagonal. As shown in Fig. 4, the additional right pixel I'$_{right}$ can be positioned adj acently to the (j,k)th pixel I$_{(j,k)}$ of the input image in a right direction. The additional bottom pixel I'bottom can be positioned adjacently to the (j,k)th pixel I$_{(j,k)}$ of the input image in a bottom direction. The additional diagonal pixel I'$_{diagonal}$ can be positioned adjacently to the (j,k)th pixel I$_{(j,k)}$ of the input image in a diagonal direction running from upper left to lower right.

As such, the RGB interpolator 131 can generate color data components of the additional right, bottom and diagonal pixels I'$_{right}$, I'$_{bottom}$ and I'$_{diagonal}$ on the basis of the color data component of the (j,k)th pixel I$_{(j,k)}$ of the input image, as represented by the following equation 5. The color data component for each of the additional right, bottom and diagonal pixels I'$_{right}$, I'bottom and I'diagonal includes the R, G and B data signals I'$_{red}$, I'$_{green}$ and I'$_{blue}$ which are obtained using the above-mentioned equation 3.

【Equation 5】

$$I'_{right} = I_{(j,k)}$$

$$I'_{bottom} = I_{(j,k)}$$

$$I'_{diagonal} = I_{(j,k)}$$

As represented by the equations 3 and 5, the R, G and B data signals I'$_{red}$, I'$_{green}$ and I'$_{blue}$ of the additional right, bottom and/or diagonal pixel I'right, I'bottom and/or I'diagonal can be the same values as those I$_{(j,k),red}$, I$_{(j,k),green}$ and I$_{(j,k),blue}$ of the (j,k)th pixel I$_{(j,k)}$ of the input image. In accordance therewith, the RGB interpolator 131 can largely reduce the computational quantity for up-scaling an image.

Although it is not shown in the drawings, the additional right pixel I'$_{right}$ can also be positioned adjacently to a (j+1,k)th pixel I$_{(j+1,k)}$ of the input image. The additional bottom pixel I'$_{bottom}$ can also be positioned adjacently to a (j,k+1)th pixel I$_{(j,k)}$ of the input image. The additional diagonal pixel I'$_{diagonal}$ can also be positioned adjacently to (j+1,k)th, (j,k+1) and (j+1,k+1) pixels I$_{(j+1,k)}$, I$_{(j,k+1)}$ and I$_{(j+1,k+1)}$ of the input image. In other words, the additional right pixel I'$_{right}$ can be positioned between the (j,k)th and (j+1,k)th pixels I$_{(j,k)}$ and I$_{(j+1,k)}$ of the input image. The additional bottom pixel I'$_{bottom}$ can be positioned between the (j,k)th and (j,k+1)th pixels I$_{(j,k)}$ and I$_{(j,k+1)}$ of the input image. The additional diagonal pixel I'$_{diagonal}$ can be positioned between the (j,k)th, (j+1,k)th, (j,k+1) and (j+1,k+1) pixels I$_{(j,k)}$, I$_{(j+1,k)}$, I$_{(j,k+1)}$ and I$_{(j+1,k+1)}$ of the input image.

As such, the W interpolator 132 can derive a W data signal I'$_{right,white}$ of the additional right pixel I'$_{right}$ from the W data signals I$_{(j,k),white}$ and I$_{(j+1,k),white}$ of the (j,k)th and (j+1,k)th pixels I$_{(j,k)}$ and I$_{(j+1,k)}$ of the input image using the following equation 6. Also, the W interpolator 132 can obtain a W data signal I'$_{bottom,white}$ of the additional bottom pixel I'bottom from the W data signals I$_{(j,k),white}$ and I$_{(j,k+1),white}$ of the (j,k)th and (j,k+1)th pixels I$_{(j,k)}$ and I$_{(j,k+1)}$ of the input image using the following equation 7. Moreover, the W interpolator 132 can derive a W data signal I'$_{diagonal,white}$ of the additional diagonal pixel I'diagonal from the W data signals I$_{(j,k),white}$, I$_{(j+1,k),white}$, I$_{(j,k+1),white}$ and I$_{(j+1,k+1),white}$ of the (j,k)th, (j+1)th, (j,k+1)th and (j+1,k+1)th pixels I$_{(j,k)}$, I$_{(j+1,k)}$, I$_{(j,k+1)}$ and I$_{(j+1,k+1)}$ of the input image using the following equation 8.

【Equation 6】

$$I'_{right,white} = \frac{I_{(j,k),white} + I_{(j+1,k),white}}{2}$$

【Equation 7】

$$I'_{bottom,white} = \frac{I_{(j,k),white} + I_{(j,k+1),white}}{2}$$

【Equation 8】

$$I'_{diagonal,white} = \frac{I_{(j,k),white} + I_{(j+1,k),white} + I_{(j,k+1),white} + I_{(j+1,k+1),white}}{4}$$

Referring to the equations 6 through 8, the W data signal I'$_{right,white}$ of the additional right pixel I'$_{right}$ corresponds to an average value of the W data signals I$_{(j,k),white}$ and I$_{(j+1,k),white}$ of the (j,k)th and (j+1,k)th pixels I$_{(j,k)}$ and I$_{(j+1,k)}$ of the input image, the W data signal I'$_{bottom,white}$ of the additional bottom pixel I'$_{bottom}$ is defined as an average value of the W data signals I$_{(j,k),white}$ and I$_{(j,k+1),white}$ of the (j,k)th and (j,k+1)th pixels I$_{(j,k)}$ and I$_{(j,k+1)}$ of the input image, and the W data signal I'$_{diagonal,white}$ of the additional diagonal pixel I'diagonal becomes an average value of the W data signals I$_{(j,k),white}$, I$_{(j+1,k),white}$, I$_{(j,k+1),white}$ and I$_{(j+1,k+1),white}$ of the (j,k)th, (j+1)th, (j,k+1)th and (j+1,k+1)th pixels I$_{(j,k)}$, I$_{(j+1,k)}$, I$_{(j,k+1)}$ and I$_{(j+1,k+1)}$

of the input image. Therefore, the W interpolator 131 can more largely reduce the computational quantity for up-scaling an image.

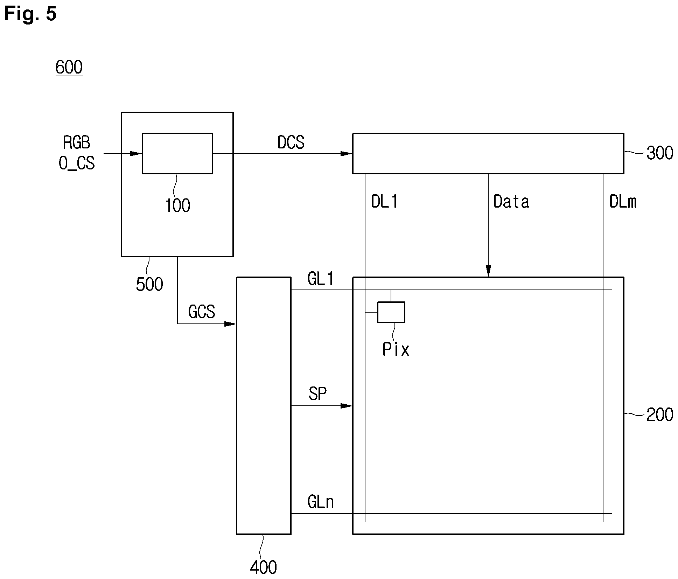

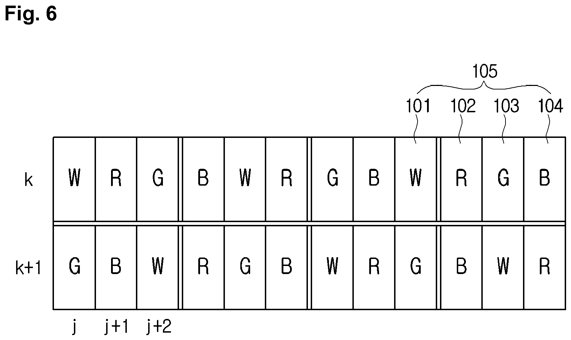

Fig. 5 is a block diagram showing a display device with a data conversion unit according to an embodiment of the present disclosure. Fig. 6 is a planar view showing arrangement of sub-pixels.

Referring to Fig. 5, the display device 600 according to an embodiment of the present disclosure can include a display panel 200, a data driver 300, a gate driver 400 and a timing controller 500. The timing controller 500 can include a graphic apparatus 100. Alternatively, the graphic apparatus 100 can be included in the display device in such a manner as to be separate from the timing controller 500.

The display panel 200 includes a plurality of gate lines GL1~GLn and a plurality of data lines DL1~DLm. Also, the display panel 200 includes sub-pixels Pix formed in respective regions which is defined by the pluralities of gate lines GL1~GLn and data lines DL1~DLm.

The gate driver 400 replies to gate control signals GCS applied from the timing controller 500, and supplies a plurality of scan signals SP to the plurality of gate lines GL1~GLn, respectively. The plurality of scan signals SP can sequentially enable the plurality of gate lines GL1~GLn in one horizontal synchronous signal interval. Such a gate driver 400 can be configured with a plurality of gate IC (Integrated circuit) chips.

The data driver 300 can reply to data control signals DCS applied from the timing controller 500 and generate data voltages whenever anyone among the plurality of gate lines GL1~GLn is enabled. The data voltages generated in the data driver 300 are applied to the plurality of data lines DL1~DLm on the display panel 200.

The timing controller 500 can generate the gate control signals GCS and the data control signals DCS using a various control signals which are applied from an external system (not shown) such as a graphic module of a computer system or an image demodulation module of a television receiver. The gate control signals GCS are used to control the gate driver 400 and the data control signals DCS are used to control the data driver 300.

The sub-pixels Pix on the display panel 200 can be used to display R, G, B and W colors. The color sub-pixels can be arranged as shown in Fig. 6. In detail, the color sub-pixels can be repeatedly arranged on an odd-numbered horizontal line k in order of a W sub-pixel 101, an R sub-pixel 102, a G sub-pixel 103 and a B sub-pixel 104. Also, the color sub-pixels can be repeatedly arranged on an even-numbered horizontal line k+1 in order of a G sub-pixel 103, a B sub-pixel 104, a W sub-pixel 101 and an R sub-pixel 102. As such, the color sub-pixels on the odd-numbered horizontal line k and the respective (or same) color sub-pixels on the even-numbered horizontal line k+1 can be arranged along a vertical direction in a zigzag pattern not a line (or row). For example, two W sub-pixels 101 can be positioned at an intersection of a jth vertical line and the odd-numbered horizontal line k and another intersection of a (j+1)th vertical line and the even-numbered horizontal line k+1. In other words, one of two same color sub-pixels (i.e., two R, G, B or W sub-pixels), which are adjacently positioned in an odd-numbered horizontal line k and an even-numbered horizontal line k+1 adjacent thereto, is disposed on an arbitrary vertical line (for example, jth vertical line), and the other one is disposed on a different vertical line (for example, (j-2 or J+2) th vertical line) which is shifted from the arbitrary vertical line by two sub-pixels in a lateral direction. Such zigzaged sub-pixel arrangement, which allows same color sub-pixels on the odd-numbered line k and the even-numbered horizontal line k+1 to be shifted from each other by the distance (or length) of two sub-pixels, can prevent the appearance of straight lines unless linear sub-pixel arrangement allowing same color sub-pixels to be arranged in a vertical direction.

For example, a liquid crystal display (LCD) device can be used as the display panel 200. In this case, the sub-pixel Pix includes a thin film transistor TFT connected to one of the gate lines GL1~GLn and one of the data lines DL1~DLm and a pixel electrode connected to the thin film transistor. The thin film transistor TFT transfers a data voltage on one of the data lines DL1~DLm to a liquid crystal cell (or the pixel electrode) in response to a scan signal SP from one of the gate lines GL1~GLn. To this end, the thin film transistor TFT includes a gate electrode connected to one of the gate lines GL1~GLn, a source electrode connected to one of the data lines DL1~DLm, and a drain electrode connected to the pixel electrode of the liquid crystal cell. Also, a storage capacitor for maintaining the voltage of the liquid crystal cell is formed on a lower glass substrate of the display panel 200. Moreover, color filters and a black matrix can be formed on an upper glass substrate of the display panel 200. The color filter is formed opposite to a pixel region in which the thin film transistor TFT is formed. The black matrix rims the color filters and shields the gate lines GL1~GLN, the data lines DL1~DLm, the thin film transistor and so one. Such color filters allow the sub-pixels to be distinguished in R, G, B and W sub-pixels. As such, the liquid crystal cells included in the R, G, B and W sub-pixels can be used to display R, G, B and W colors, respectively.

As another example of the display panel 200, an organic light emitting diode display panel can be used. In this case, the R, G, B and W sub-pixels can each include an organic light emitting diode. Such R, G, B and W sub-pixels can output respective color lights by emitting the respective organic light emitting diodes. As such, the organic light emitting diode display panel can display an image. The organic light emitting diode can be formed in either a structure including a hole transport layer, an organic emission layer and an electron transport layer or another structure including a hole injection layer, a hole transport layer, an organic emission layer, an electron transport layer and an electron injection layer. Moreover, a functional layer for enhancing light emission efficiency and life span of the organic emission layer can be additionally included in the organic light emitting diode.

As described above, the graphic apparatus with the image up-scale unit 130 according to an embodiment of the present disclosure can up-scale an input image by dividing RGBW data signals RGBW into RGB data signals RGB and a W data signal W and generating RGB data signals and W data signal of an additional pixel using the divided RGB data signals and the divided W data signal. In other words, the RGBW data signals are divided into a color difference component and a brightness component and interpolation is differently performed for the color difference component and the brightness component. As such, the interpolation with a small computational quantity can be performed for any one of the divided components which has a low sensitivity in human color perception. Therefore, the computational quantity can be reduced.

More specifically, the RGB data signals of the additional pixel are generated originally using the RGB data signals of an adjacent pixel of the input image which is nearest adjacent to the additional pixel. The W data signal of the additional pixel is generated by averaging the W data signals of pixels of the input image which are nearest adjacent to the additional pixel. In other words, the color difference component of the additional pixel having the low sensitivity in the human color perception is generated originally using that of a pixel on the input image which is nearest adjacent to the additional pixel. As such, the computational quantity for the image up-scale can be largely reduced. Also, the number of line memories and the size of a logic circuit can be reduced. Therefore, not only the image up-scale unit but also the graphic apparatus can be largely reduced in manufacture cost.

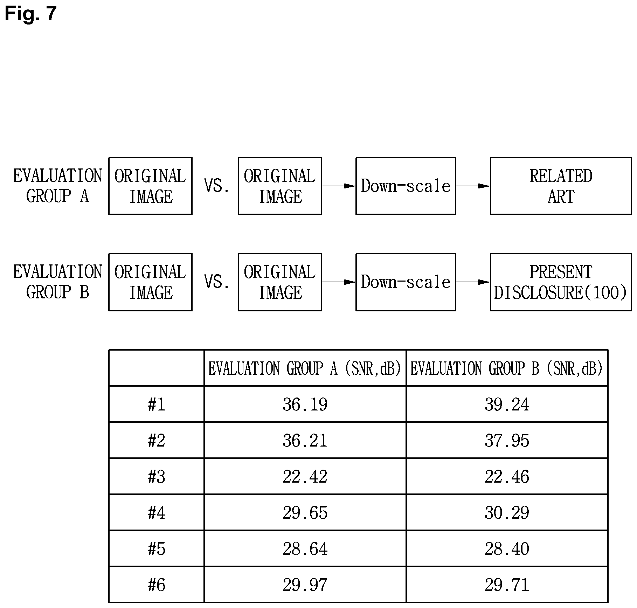

Fig. 7 is a data sheet quantitatively comparative-evaluating performances of image up-scale units according embodiments of the present disclosure and the related art.

The data sheet of Fig. 7 quantitatively comparative-evaluates the performances of the up-scale units according to the present disclosure and the related art using SNRs (signal-to-noise ratios) . In Fig. 7, 'evaluation group A' includes measured SNRs of up-scaled images, which are performed by an image up-scale unit of the related art for down-scaled images derived from original images, with respect to the original images. Meanwhile, 'evaluation group B' includes measured SNRs of up-scaled images which are performed by the image up-scale unit of the present disclosure for the down-scaled images derived from the original images, with respect to the original images . The image up-scale unit of the related art can employ one of bi-linear interpolation, bi-cubic interpolation, cubic spline interpolation, Lanczos interpolation and edge directed interpolation EDI. As seen from the evaluation groups A and B in Fig. 7, it is evident that the image up-scale unit of the present disclosure is similar to that of the related art in signal-to-noise ratio. In other words, the image up-scale unit of the present disclosure differently interpolating the color difference component and the brightness component can provide almost equivalent performance to that of the related art having a high computational complexity. As such, the image up-scale unit of the present disclosure can up-scale the image with maintaining proper image quality. Therefore, the image up-scale unit of the present disclosure can reduce the computational quantity and the logic circuit size.

Although the present disclosure has been limitedly explained regarding only the embodiments described above, the scope of the present disclosure shall be determined only by the appended claims and their equivalents without being limited to the description of the present disclosure.

**Claims**

1. A unit (130) for up-scaling an RGBW input image by adding the RGBW input image to a plurality of additional RGBW pixels to generate an up-scaled image, wherein the unit is configured to output the up-scaled image, and wherein the unit comprises:

   a RGB interpolator (131) configured to generate red, hereinafter R, green, hereinafter G, and blue, hereinafter B, data signals for R, G and B color sub-pixels of each of the additional pixels on the basis of the R, G and B data signals of one arbitrary pixel among pixels of the input image which are adjacent to the respective additional pixel; and
   a W interpolator (132) configured to generate a brightness, hereinafter W, data signal for a white color sub-pixel of each of the additional pixel on the basis of W data signals of the pixels of the input image which are adjacent to the respective additional pixel,
   wherein the RGB interpolator is configured to obtain R, G and B data signals for each of the additional pixels by copying the RGB data signals of the respective, adjacent arbitrary pixel, and
   wherein the W data signal of the additional pixel is obtained by averaging the W data signals of at least two pixels of the input image which are adjacent to the additional pixel.

2. The unit of claim 1, wherein the R, G and B data signals for each of the additional pixels are the same values as those of the most antecedent pixel among the pixels of the input image which are adjacent to the respective additional pixel.

3. The unit of any preceding claim, wherein the additional pixels include:

at least one additional pixel positioned between two pixels of the input image which are adjacent to each other in a horizontal direction;
at least one other additional pixel positioned between two pixels of the input image which are adjacent to each other in a vertical direction; and
at least one still other additional pixel positioned between four pixels of the input image which are adjacent to one another in the horizontal and vertical directions.

4. The unit of claim 3, wherein the W data signal of the at least one additional pixel is obtained by averaging the W data signals of the two pixels of the input image which are adjacent to the at least one additional pixel in the horizontal direction.

5. The unit of claim 3 or claim 4, wherein the W data signal of the at least one other additional pixel is obtained by averaging the W data signals of the two pixels of the input image which are adjacent to the at least one other additional pixel in the vertical direction.

6. The unit of any one of claims 3 to 5, wherein the W data signal of the at least one still other additional pixel is obtained by averaging the W data signals of the four pixels of the input image which are adjacent to the at least one still other additional pixel in diagonal directions.

7. A method of up-scaling an RGBW input image by adding the RGBW input image to a plurality of additional RGBW pixels to generate an up-scaled image, wherein the method comprises outputting the up-scaled image, and wherein generating the up-scaled image comprises:

generating red, hereinafter R, green, hereinafter G, and blue, hereinafter B, data signals for R, G and B color sub-pixels of each of the additional pixels on the basis of the R, G and B data signals of one arbitrary pixel among pixels of the input image which are adjacent to the respective additional pixel; and
generating a brightness, hereinafter W, data signal for a white color sub-pixel of each of the additional pixel on the basis of W data signals of the pixels of the input image which are adjacent to the respective additional pixel, wherein the R, G and B data signals for each of the additional pixels are obtained by copying the RGB data signals of the respective, adjacent arbitrary pixel, and
wherein the W data signal of the additional pixel is obtained by averaging the W data signals of at least two pixels of the input image which are adjacent to the additional pixel.

8. The method of claim 7, wherein the R, G and B data signals for each of the additional pixels are the same value as that of the most antecedent pixel among the pixels of the input image which are adjacent to the respective additional pixel.

9. The method of claim 7 or claim 8, wherein the additional pixels include:

at least one additional pixel positioned between two pixels of the input image which are adjacent to each other in a horizontal direction;
at least one other additional pixel positioned between two pixels of the input image which are adjacent to each other in a vertical direction; and
at least one still other additional pixel positioned between four pixels of the input image which are adjacent to one another in the horizontal and vertical directions.

10. The method of claim 9, wherein the W data signal of the at least one additional pixel is obtained by averaging the W data signals of the two pixels of the input image which are adjacent to the at least one additional pixel in the horizontal direction.

11. The method of claim 9 or claim 10, wherein the W data signal of the at least one other additional pixel is obtained by averaging the W data signals of the two pixels of the input image which are adjacent to the at least one other additional pixel in the vertical direction.

**12.** The method of any one of claims 9 to 11, wherein the W data signal of the at least one still other additional pixel is obtained by averaging the W data signals of the four pixels of the input image which are adjacent to the at least one still other additional pixel in diagonal directions.

**Patentansprüche**

**1.** Einheit (130) zum Vergrößern eines RGBW-Eingangsbildes, indem zu dem RGBW-Eingangsbild eine Vielzahl von zusätzlichen RGBW-Pixeln hinzugefügt werden, um ein vergrößertes Bild zu erzeugen, wobei die Einheit konfiguriert ist zum Ausgeben des vergrößerten Bildes, und wobei die Einheit umfasst:

einen RGB-Interpolator (131), der konfiguriert ist zum Erzeugen von roten, nachfolgend mit R bezeichnet, grünen, nachfolgend mit G bezeichnet, und blauen, nachfolgend mit B bezeichnet, Datensignalen für R-, G- und B-farbige Teilpixel von jedem der zusätzlichen Pixel auf der Grundlage der R-, G- und B-Datensignale von einem beliebigen Pixel aus den Pixeln des Eingangsbildes, die sich in der Nachbarschaft des entsprechenden zusätzlichen Pixels befinden; und
einen W-Interpolator (132), der konfiguriert ist zum Erzeugen eines Helligkeitsdatensignals, nachfolgend mit W-Datensignal bezeichnet, für ein weißfarbiges Teilpixel von jedem der zusätzlichen Pixel auf der Grundlage der W-Datensignale der Pixel des Eingangsbildes, die sich in der Nachbarschaft des entsprechenden zusätzlichen Pixels befinden,
wobei der RGB-Interpolator konfiguriert ist zum Erhalten von R-, G- und B-Datensignalen für jedes der zusätzlichen Pixel, indem die RGB-Datensignale des entsprechenden benachbarten beliebigen Pixels kopiert werden, und
wobei die W-Datensignale der zusätzlichen Pixel erhalten werden, indem die W-Datensignale von mindestens zwei Pixeln des Eingangsbildes gemittelt werden, die sich in der Nachbarschaft des zusätzlichen Pixels befinden.

**2.** Einheit nach Anspruch 1, wobei die R-, G- und B-Datensignale für jedes der zusätzlichen Pixel die gleichen Werte wie jene des am weitesten zurückliegenden Pixels aus den Pixeln des Eingangsbildes sind, die sich in der Nachbarschaft des zusätzlichen Pixels befinden.

**3.** Einheit nach einem der vorhergehenden Ansprüche, wobei die zusätzlichen Pixel enthalten:

mindestens ein zusätzliches Pixel, das zwischen zwei Pixeln des Eingangsbildes positioniert ist, die sich in einer horizontalen Richtung benachbart zueinander befinden;
mindestens ein weiteres zusätzliches Pixel, das zwischen zwei Pixeln des Eingangsbildes positioniert ist, die sich in einer vertikalen Richtung benachbart zueinander befinden; und
mindestens noch ein weiteres zusätzliches Pixel, das zwischen vier Pixeln des Eingangsbildes positioniert ist, die sich in horizontaler und in vertikaler Richtung benachbart zueinander befinden.

**4.** Einheit nach Anspruch 3, wobei das W-Datensignal des mindestens einen zusätzlichen Pixels erhalten werden, indem die W-Datensignale der zwei Pixel des Eingangsbildes gemittelt werden, die sich in horizontaler Richtung in der Nachbarschaft des mindestens einen zusätzlichen Pixels befinden.

**5.** Einheit nach Anspruch 3 oder Anspruch 4, wobei das W-Datensignal des mindestens einen weiteren zusätzlichen Pixels erhalten wird, indem die W-Datensignale der zwei Pixel des Eingangsbildes gemittelt werden, die sich in vertikaler Richtung in der Nachbarschaft des mindestens einen weiteren zusätzlichen Pixels befinden.

**6.** Einheit nach einem der Ansprüche 3 bis 5, wobei das W-Datensignal des mindestens noch einen weiteren zusätzlichen Pixels erhalten wird, indem die W-Datensignale der vier Pixel des Eingangsbildes gemittelt werden, die sich in diagonalen Richtungen in der Nachbarschaft des mindestens noch einen weiteren zusätzlichen Pixels befinden.

**7.** Verfahren zum Vergrößern eines RGBW-Eingangsbildes, indem zu dem RGBW-Eingangsbild eine Vielzahl von zusätzlichen RGBW-Pixeln hinzugefügt werden, um ein vergrößertes Bild zu erzeugen, wobei das Verfahren ein Ausgeben des vergrößerten Bildes umfasst und wobei das Erzeugen des vergrößerten Bildes umfasst:

Erzeugen von roten, nachfolgend mit R bezeichnet, grünen, nachfolgend mit G bezeichnet, und blauen, nachfolgend mit B bezeichnet, Datensignalen für R-, G- und B-farbige Teilpixel von jedem der zusätzlichen Pixel auf der Grundlage der R-, G- und B-Datensignale von einem beliebigen Pixel aus den Pixeln des Eingangsbildes, die sich in der Nachbarschaft des entsprechenden zusätzlichen Pixels befinden; und

Erzeugen eines Helligkeitsdatensignals, nachfolgend mit W-Datensignal bezeichnet, für ein weißfarbiges Teilpixel von jedem der zusätzlichen Pixel auf der Grundlage der W-Datensignale der Pixel des Eingangsbildes, die sich in der Nachbarschaft des entsprechenden zusätzlichen Pixels befinden,

wobei die R-, G- und B-Datensignale für jedes der zusätzlichen Pixel erhalten werden, indem die RGB-Datensignale des entsprechenden benachbarten beliebigen Pixels kopiert werden, und

wobei die W-Datensignale der zusätzlichen Pixel erhalten werden, indem die W-Datensignale von mindestens zwei Pixeln des Eingangsbildes gemittelt werden, die sich in der Nachbarschaft des zusätzlichen Pixels befinden.

8. Verfahren nach Anspruch 7, wobei die R-, G- und B-Datensignale für jedes der zusätzlichen Pixel der gleiche Wert wie der des am weitesten zurückliegende Pixel aus den Pixeln des Eingangsbildes sind, die sich in der Nachbarschaft des zusätzlichen Pixels befinden.

9. Verfahren nach Anspruch 7 oder Anspruch 8, wobei die zusätzlichen Pixel enthalten:

mindestens ein zusätzliches Pixel, das zwischen zwei Pixeln des Eingangsbildes positioniert ist, die sich in einer horizontalen Richtung benachbart zueinander befinden;

mindestens ein weiteres zusätzliches Pixel, das zwischen zwei Pixeln des Eingangsbildes positioniert ist, die sich in einer vertikalen Richtung benachbart zueinander befinden; und

mindestens noch ein weiteres zusätzliches Pixel, das zwischen vier Pixeln des Eingangsbildes positioniert ist, die sich in horizontaler und in vertikaler Richtung benachbart zueinander befinden.

10. Verfahren nach Anspruch 9, wobei das W-Datensignal des mindestens einen zusätzlichen Pixels erhalten wird, indem die W-Datensignale der zwei Pixel des Eingangsbildes gemittelt werden, die sich in horizontaler Richtung in der Nachbarschaft des mindestens einen zusätzlichen Pixels befinden.

11. Verfahren nach Anspruch 9 oder Anspruch 10, wobei das W-Datensignal des mindestens einen weiteren zusätzlichen Pixels erhalten wird, indem die W-Datensignale der zwei Pixel des Eingangsbildes gemittelt werden, die sich in vertikaler Richtung in der Nachbarschaft des mindestens einen weiteren zusätzlichen Pixels befinden.

12. Verfahren nach einem der Ansprüche 9 bis 11, wobei das W-Datensignal des mindestens noch einen weiteren zusätzlichen Pixels erhalten wird, indem die W-Datensignale der vier Pixel des Eingangsbildes gemittelt werden, die sich in diagonalen Richtungen in der Nachbarschaft des mindestens noch einen weiteren zusätzlichen Pixels befinden.

**Revendications**

1. Unité (130) pour augmenter la résolution d'une image d'entrée RGBW en ajoutant l'image d'entrée RGBW à une pluralité de pixels RGBW supplémentaires en vue de générer une image à la résolution augmentée, l'unité étant configurée pour délivrer en sortie l'image à la résolution augmentée et l'unité comprenant :

un interpolateur RGB (131) configuré pour générer des signaux de données rouges, ci-après R, verts, ci-après G, et bleus, ci-après B, pour des sous-pixels de couleur R, G et B de chacun des pixels supplémentaires sur la base des signaux de données R, G et B d'un pixel arbitraire parmi des pixels de l'image d'entrée qui sont adjacents au pixel supplémentaire respectif ; et

un interpolateur W (132) configuré pour générer un signal de données de luminosité, ci-après W, pour un sous-pixel de couleur blanche de chacun des pixels supplémentaires sur la base de signaux de données W des pixels de l'image d'entrée qui sont adjacents au pixel supplémentaire respectif,

l'interpolateur RGB étant configuré pour obtenir des signaux de données R, G et B pour chacun des pixels supplémentaires en copiant les signaux de données RGB du pixel arbitraire adjacent respectif, et

le signal de données W du pixel supplémentaire étant obtenu en calculant la moyenne des signaux de données W d'au moins deux pixels de l'image d'entrée qui sont adjacents au pixel supplémentaire.

2. Unité selon la revendication 1, les signaux de données R, G et B pour chacun des pixels supplémentaires étant les mêmes valeurs que celle du pixel le plus antécédent parmi les pixels de l'image d'entrée qui sont adjacents au pixel supplémentaire respectif.

3. Unité selon l'une quelconque des revendications précédentes, les pixels supplémentaires comprenant :

> au moins un pixel supplémentaire positionné entre deux pixels de l'image d'entrée qui sont adjacents l'un à l'autre dans une direction horizontale ;
> au moins un autre pixel supplémentaire positionné entre deux pixels de l'image d'entrée qui sont adjacents l'un à l'autre dans une direction verticale ; et
> au moins encore un autre pixel supplémentaire positionné entre quatre pixels de l'image d'entrée qui sont adjacents les uns aux autres dans les directions horizontale et verticale.

4. Unité selon la revendication 3, le signal de données W de l'au moins un pixel supplémentaire étant obtenu en calculant la moyenne des signaux de données W des deux pixels de l'image d'entrée qui sont adjacents à l'au moins un pixel supplémentaire dans la direction horizontale.

5. Unité selon la revendication 3 ou la revendication 4, le signal de données W de l'au moins un autre pixel supplémentaire étant obtenu en calculant la moyenne des signaux de données W des deux pixels de l'image d'entrée qui sont adjacents à l'au moins un autre pixel supplémentaire dans la direction verticale.

6. Unité selon l'une quelconque des revendications 3 à 5, le signal de données W de l'au moins encore un autre pixel supplémentaire étant obtenu en calculant la moyenne des signaux de données W des quatre pixels de l'image d'entrée qui sont adjacents à l'au moins encore un autre pixel supplémentaire dans des directions diagonales.

7. Procédé pour augmenter la résolution d'une image d'entrée RGBW en ajoutant l'image d'entrée RGBW à une pluralité de pixels RGBW supplémentaires en vue de générer une image à la résolution augmentée, le procédé comprenant la délivrance en sortie de l'image à la résolution augmentée et la génération de l'image à la résolution augmentée comprenant :

> génération de signaux de données rouges, ci-après R, verts, ci-après G, et bleus, ci-après B, pour des sous-pixels de couleur R, G et B de chacun des pixels supplémentaires sur la base des signaux de données R, G et B d'un pixel arbitraire parmi des pixels de l'image d'entrée qui sont adjacents au pixel supplémentaire respectif ; et
> génération d'un signal de données de luminosité, ci-après W, pour un sous-pixel de couleur blanche de chacun des pixels supplémentaires sur la base des signaux de données W des pixels de l'image d'entrée qui sont adjacents au pixel supplémentaire respectif,
> les signaux de données R, G et B pour chacun des pixels supplémentaires étant obtenus en copiant les signaux de données RGB du pixel arbitraire adjacent respectif, et
> le signal de données W du pixel supplémentaire étant obtenu en calculant la moyenne des signaux de données W d'au moins deux pixels de l'image d'entrée qui sont adjacents au pixel supplémentaire.

8. Procédé selon la revendication 7, les signaux de données R, G et B pour chacun des pixels supplémentaires étant les mêmes valeurs que celle du pixel le plus antécédent parmi les pixels de l'image d'entrée qui sont adjacents au pixel supplémentaire respectif.

9. Procédé selon la revendication 7 ou la revendication 8, les pixels supplémentaires comprenant :

> au moins un pixel supplémentaire positionné entre deux pixels de l'image d'entrée qui sont adjacents l'un à l'autre dans une direction horizontale ;
> au moins un autre pixel supplémentaire positionné entre deux pixels de l'image d'entrée qui sont adjacents l'un à l'autre dans une direction verticale ; et
> au moins encore un autre pixel supplémentaire positionné entre quatre pixels de l'image d'entrée qui sont adjacents les uns aux autres dans les directions horizontale et verticale.

10. Procédé selon la revendication 9, le signal de données W de l'au moins un pixel supplémentaire étant obtenu en calculant la moyenne des signaux de données W des deux pixels de l'image d'entrée qui sont adjacents à l'au moins un pixel supplémentaire dans la direction horizontale.

11. Procédé selon la revendication 9 ou la revendication 10, le signal de données W de l'au moins un autre pixel supplémentaire étant obtenu en calculant la moyenne des signaux de données W des deux pixels de l'image d'entrée qui sont adjacents à l'au moins un autre pixel supplémentaire dans la direction verticale.

**12.** Procédé selon l'une quelconque des revendications 9 à 11, le signal de données W de l'au moins encore un autre pixel supplémentaire étant obtenu en calculant la moyenne des signaux de données W des quatre pixels de l'image d'entrée qui sont adjacents à l'encore au moins un autre pixel supplémentaire dans des directions diagonales.

**Fig. 1**

100

RGB → [110] → Linear RGBW → [120] → Linear RGBW → [130] → Linear RGBW → [140] → Linear RGBW → [150] → Nonlinear RGBW →

**Fig. 2**

Linear RGBW → Linear RGBW → [131] → Linear RGB → [140] → Linear RGBW → [150] → Nonlinear RGBW →

Linear W → [132] → Linear W

130

**Fig. 3**

I (j, k) → I'

**Fig. 4**

**Fig. 5**

600

**Fig. 6**

EP 3 012 830 B1

**Fig. 7**

| EVALUATION GROUP A | ORIGINAL IMAGE | VS. | ORIGINAL IMAGE | → Down-scale → | RELATED ART |

| EVALUATION GROUP B | ORIGINAL IMAGE | VS. | ORIGINAL IMAGE | → Down-scale → | PRESENT DISCLOSURE(100) |

|    | EVALUATION GROUP A (SNR,dB) | EVALUATION GROUP B (SNR,dB) |
|----|----|----|
| #1 | 36.19 | 39.24 |
| #2 | 36.21 | 37.95 |
| #3 | 22.42 | 22.46 |
| #4 | 29.65 | 30.29 |
| #5 | 28.64 | 28.40 |
| #6 | 29.97 | 29.71 |

**EP 3 012 830 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100259556 A1
- US 20110037784 A1
- US 20080079755 A1
- US 20070279372 A1
- KR 1020130060476
- KR 1020130030598